# EUROPÄISCHE PATENTSCHRIFT

(11) **EP 1 534 792 B1**
(45) Veröffentlichungstag und Bekanntmachung des Hinweises auf die Patenterteilung: **09.05.2007**
(21) Anmeldenummer: 03794912.0
(22) Anmeldetag: 21.08.2003
(51) Int. Cl.: C09D 17/00, C09D 5/00

(54) **METALLPIGMENTE ENTHALTENDE, WÄSSRIGE PIGMENTPASTEN UND IHRE VERWENDUNG ZUR HERSTELLUNG VON EFFEKTGEBENDEN WÄSSRIGEN BESCHICHTUNGSSTOFFEN**
AQUEOUS PIGMENT PASTES CONTAINING METALLIC PIGMENTS AND THE USE THEREOF FOR PRODUCING SUBSTANCES FOR DECORATIVE AQUEOUS COATINGS
PATES PIGMENTAIRES AQUEUSES CONTENANT DES PIGMENTS METALLIQUES ET LEUR UTILISATION POUR PRODUIRE DES SUBSTANCES DE REVETEMENT AQUEUSES A EFFETS DECORATIFS

(30) Priorität: 02.09.2002 DE 10240972
(43) Veröffentlichungstag der Anmeldung: 01.06.2005
(73) Patentinhaber: BASF Coatings AG, 48165 Münster (DE)
(72) Erfinder: HUPP, Anne, 97270 Kist (DE); KUNSZT, Carmen, 97762 Hammelburg (DE); SANDERS, Holger, 97621 Güntersleben (DE)
(86) Internationale Anmeldenummer: PCT/EP2003/009267
(87) Internationale Veröffentlichungsnummer: WO 2004/024837

(56) Entgegenhaltungen:
- EP-A- 0 890 620
- EP-A- 1 256 603

## Beschreibung

Die vorliegende Erfindung betrifft Metall-, insbesondere Aluminium-Pigmente enthaltende, von Bindemitteln und Reibharzen freie, wässrige Pigmentpasten. Außerdem betrifft die vorliegende Erfindung die Verwendung der Metallpigmente enthaltenden, von Bindemitteln und Reibharzen freien, wässrigen Pigmentpasten für die Herstellung von effektgebenden wässrigen Beschichtungsstoffen. Außerdem betrifft die vorliegende Erfindung ein neues Verfahren zur Herstellung von effektgebenden wässrigen Beschichtungsstoffen.

Die Verwendung von Metall- oder Aluminiumeffektpigmenten in Wasserbasislacken an sich ist seit langem bekannt.

Wegen ihrer vergleichsweise großen Empfindlichkeit gegen mechanische Einwirkung bereiten Metall- insbesondere Aluminium-Pigmente allerdings Probleme bei der Einarbeitung in wässrige Beschichtungsstoffe, insbesondere Wasserbasislacke.

Die Metallpigmente werden üblicherweise in organischen Lösemitteln mit oder ohne Bindemittel angeteigt oder angerieben.

Nachteilig ist auch, dass die betreffenden Pigmentpasten nur eine sehr begrenzte Lagerfähigkeit von maximal wenigen Tagen haben. Danach kommt es zum Absetzen und zur Bildung von Stippen und Koagulaten, was die Qualität der farb- und/oder effektgebenden Mehrschichtlackierungen durch Wolkenbildung verringert. Auch für die großtechnische Lackierung in der Linie beim Automobilhersteller ist die mangelhafte Lagerfähigkeit ein großes Problem. So können die Pigmentpasten nicht auf Vorrat in größeren Mengen produziert werden, was aber aus wirtschaftlichen Gründen wünschenswert wäre. Auch die Transportfähigkeit der Pigmentpasten lässt stark zu wünschen übrig. Dadurch entfällt die Möglichkeit, die Pigmentpasten an einem Produktionsstandort mit optimalen Produktions-Bedingungen herzustellen und zu den Kunden zu transportieren. Außerdem müssen die Pigmentpasten für das Nachtönen von Wasserbasislacken jedesmal neu hergestellt werden.

Aufgabe der vorliegenden Erfindung ist es, eine Metall-, insbesondere Aluminium-Pigmente enthaltende, wässrige Pigmentpaste bereitzustellen, die die Nachteile des Standes der Technik nicht mehr länger aufweist, sondern die bei einem möglichst geringen Gehalt an organischen Lösemitteln, Additiven und polymeren Bindemitteln stabil, lagerfähig, transportfähig und ohne Beschädigung der Metallpigmente in einfacher Weise herstellbar ist. Vorzugsweise soll die Metallpigmente enthaltende, wässrige Pigmentpaste bis zu 3 Monate ohne Absetzen und ohne Bildung von Stippen und Koagulaten lagerfähig sein.

Die Metallpigmente enthaltende, wässrige Pigmentpaste soll an einem Produktionsstandort, der optimale Bedingungen bietet, hergestellt und zu den Kunden, insbesondere zu den Automobilherstellern, transportiert werden können. In dieser Weise soll der Aufwand für die Lagerhaltung signifikant verringert werden. Außerdem soll die Metallpigmente enthaltende, wässrige Pigmentpaste in den Ringleitungen der Lackieranlagen problemlos geschert werden können, ohne dass sie geschädigt wird.

Die Metallpigmente enthaltende, wässrige Pigmentpaste soll die Herstellung lagerfähiger, transportierbarer, farbtonstabiler, effektstabiler und leicht applizierbarer, wässriger Beschichtungsstoffe, insbesondere Wasserbasislacke, ermöglichen, die hervorragende farb- und/oder effektgebende Mehrschicht-Lackierungen von Automobilqualität (vgl. hierzu auch das europäische Patent EP 0 352 298 B 1, Seite 15, Zeile 42, bis Seite 17, Zeile 40) liefern.

Demgemäß wurde die Metallpigmente enthaltende, von Bindemitteln und Reibharzen freie, wässrige Pigmentpaste gefunden, die, bezogen auf ihre Gesamtmenge,
(A) 15 bis 40 Gew.-% mindestens eines Metallpigments,
(B) 0,45 bis 0,75 Gew.-% mindestens eines nichtassoziativ wirkenden Verdickers aus mindestens einem Methacrytatcopotymerisat auf Basis von (C₁-C₆)-Alkyl(meth)acrylat und (Meth)acrylsäure,
(C) 0,1 bis 0,4 Gew.-% mindestens eines organischen Amins,
(D) 0,5 bis 8 Gew.-% mindestens eines nichtionischen Tensids und
(E) mindestens 50 Gew.-% Wasser
enthält und im Folgenden als »erfindungsgemäße Pigmentpaste« bezeichnet wird.

Vorzugsweise enthält die Pigmentmasse bezogen auf ihre Gesamtmenge
(A) 34 Gew.-% eines Aluminiumpigments,
(B) 0,53 Gew.-% eines nichtassoziativ wirkenden Verdickers aus mindestens einem Methacrylatcopolymerisat auf Basis von (C₁-C₆)-Alkyl(meth)acrylat und (Meth)acrylsäure,
(C) 0,22 Gew.-% eines organischen Amins,
(D) 0,61 Gew.-% eines nichtionischen Tensids,
(E) 54 Gew.-% Wasser.

Die erfindungsgemäße Pigmentpaste kann darüber hinaus alle üblicherweise in Pigmentpasten und/oder Beschichtungsstoffen verwendeten weiteren Bestandteile und Additive enthalten.

Außerdem wurde die Verwendung der erfindungsgemäßen Pigmentpaste zur Herstellung von effektgebenden, insbesondere farb- und effektgebenden, wässrigen Beschichtungsstoffen gefunden, die im Folgenden als »erfindungsgemäße Verwendung« bezeichnet wird.

Nicht zuletzt wurde das Verfahren zur Herstellung eines effektgebenden oder eines farb- und effektgebenden, wässrigen Beschichtungsstoffs gefunden, bei dem man mindestens eine Pigmentpaste mit mindestens einem wässrigen Mischlack, enthaltend mindestens ein wasserlösliches und/oder -dispergierbares Bindemittel, vermischt und die resultierende Mischung homogenisiert, wobei man mindestens eine erfindungsgemäße Pigmentpaste mit dem Mischlack in einer Menge vermischt, dass der resultierende effektgebende oder farb- und effektgebende, wässrige Beschichtungsstoff, bezogen auf seine Gesamtmenge,
- 0,1 bis 6 Gew.-% mindestens eines Metallpigments (A),
- 0,05 bis 2 Gew.-% mindestens eines nichtassoziativ wirkenden Verdickers (B) aus mindestens einem Methacrylatcopolymerisat auf Basis von (C₁-C₆)-Alkyl(meth)acrylat und (Meth)acrylsäure und
- 0,02 bis 2,4 Gew.-% mindestens eines nichtionischen Tensids (D)
enthält.

Im folgenden wird das Verfahren zur Herstellung eines effektgebenden Beschichtungsstoffs als »erfindungsgemäßes Verfahren« bezeichnet.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Pigmentpaste gelöst werden konnte, ohne dass dabei die eingangs geschilderten Nachteile des Standes der Technik auftraten.

Die erfindungsgemäße Pigmentpaste war ohne Beschädigung der Metallpigmente in einfacher Weise herstellbar. Dabei war sie im wesentlichen oder völlig frei von organischen Lösemitteln, Bindemitteln und Reibharzen. Auch mussten nur vergleichsweise geringe Mengen an Additiven zugesetzt werden. Dennoch war die erfindungsgemäße Pigmentpaste überraschenderweise stabil, transportfähig und lagerfähig. Besonders überraschend war, dass die erfindungsgemäße Pigmentpaste bis zu 3 Monate ohne Absetzen und ohne Bildung von Stippen und Koagulaten lagerfähig war.

Die erfindungsgemäße Pigmentpaste konnte an einem Produktionsstandort, der optimale Bedingungen bot, hergestellt und zu den Kunden, insbesondere zu den Automobilherstellern, transportiert werden. In dieser Weise konnte der Aufwand für die Lagerhaltung beim Kunden signifikant verringert werden. Außerdem konnte die erfindungsgemäße Pigmentpaste in den Ringleitungen der Lackieranlagen problemlos geschert werden, ohne dass sie geschädigt wurde.

Überraschenderweise lieferte die erfindungsgemäße Pigmentpaste lagerfähige, transportfähige, farbtonstabile, effektstabile und leicht applizierbare, wässrige Beschichtungsstoffe, insbesondere Wasserbasislacke.

Die Wasserbasislacke ermöglichten die Herstellung hervorragender effektgebender oder farb- und effektgebender Mehrschichtlackierungen von Automobilqualität. Gemäß dem europäischen Patent EP 0 352 298 B 1, Seite 15, Zeile 42, bis Seite 17, Zeile 14, bedeutet dies, dass die betreffenden Mehrschichtlackierungen
(1) einen hohen Glanz,
(2) eine hohe Abbildungsunterscheidbarkeit,
(3) ein hohes und gleichmäßiges Deckvermögen,
(4) eine einheitliche Trockenschichtdicke,
(5) eine hohe Benzinbeständigkeit,
(6) eine hohe Lösemittelbeständigkeit,
(7) eine hohe Säurebeständigkeit,
(8) eine hohe Härte,
(9) eine hohe Abriebfestigkeit,
(10) eine hohe Kratzfestigkeit,
(11) eine hohe Schlagfestigkeit,
(12) eine hohe Zwischenschichthaftung und Haftung auf dem Substrat und
(13) eine hohe Witterungsstabilität und UV-Beständigkeit
aufwiesen.

Die erfindungsgemäße Pigmentpaste ist von Bindemitteln und Reibharzen frei. Zu dem Begriff »Bindemittel« wird auf Römpp Lexikon Lacke und Druckfarben, Georg Thieme Verlag, Stuttgart, New York, 1998, »Bindemittel«, Seiten 73 und 74, verwiesen. Reibharze dienen dem Anreiben von Pigmenten, »Anreiben«, Seite 34) zur Herstellung von Pigmentpasten oder Pigmentpräparationen (vgl. Römpp Lexikon Lacke und Druckfarben, Georg Thieme Verlag, Stuttgart, New York, 1998, »Pigmentpräparationen«, Seite 452). Sie sind Bindemittel, die eine besonders hohe Fähigkeit zur Dispergierung von Pigmenten aufweisen.

Im Rahmen der vorliegenden Erfindung bedeutet »von Bindemitteln und Reibharzen frei«, dass die erfindungsgemäße Pigmentpaste keine Bindemittel und keine Reibharze enthält oder nur so geringe Mengen hiervon, dass die anwendungstechnischen Eigenschaften der erfindungsgemäßen Pigmentpaste hierdurch nicht geprägt, insbesondere nicht nachteilig beeinflusst werden.

Vorzugsweise ist die erfindungsgemäße Pigmentpaste auch frei von organischen Lösemitteln. Dies bedeutet, dass die erfindungsgemäße Pigmentpaste nur so geringe Mengen an organischen Lösemitteln enthält, dass die anwendungstechnischen Eigenschaften der erfindungsgemäßen Pigmentpaste hierdurch nicht geprägt, insbesondere nicht nachteilig beeinflusst werden. Vorzugsweise liegt der Gehalt an organischen Lösemitteln, bezogen auf die erfindungsgemäßen Pigmentpaste, unter 10, bevorzugt unter 5 und besonders bevorzugt unter 1 Gew.-% und insbesondere unterhalb der Nachweisgrenze der organischen Lösemittel.

Die erfindungsgemäße Pigmentpaste enthält mindestens ein Metallpigment (A) und vorzugsweise mindestens zwei, bevorzugt mindestens drei und insbesondere zwei Metallpigmente (A). Unter Metallpigmenten versteht man feinteilige, meist blättchenförmige metallische Pigmente, die als Pulver oder Pigmentpasten in den Handel kommen. Man unterscheidet zwischen Metalleffektpigmenten und solchen Metalleffektpigmenten, die funktionelle Aufgaben erfüllen, z. B. im Korrosionsschutz, als leitfähige Pigmente oder zum Schutz gegen elektromagnetische Strahlung (EMI-Shielding), s. Tabelle. Neben den blättchenförmigen Metalleffektpigmenten (Flakes) gibt es Stäube mit kugelförmigen Partikeln (Zink-Staub, Blei-Staub) und das dendritische Kupfer-Pulver (vgl. Römpp Lexikon Lacke und Druckfarben, Georg Thieme Verlag, Stuttgart, New York, 1998, S. 381 "Metallpigmente").

### Übersicht über Metallpigmente

| Metalleffektpigmente | Funktionelle Pigmente |
|---|---|
| Aluminium-Pigmente | Blei-Staub |
| Goldbronzen | Zink-Staub |
| | Kupfer-Pulver |
| | Zink-Pigmente |
| | Leitfähige Pigmente |

Die Metallpigmente (A) sind in der erfindungsgemäßen Pigmentpaste, bezogen auf ihre Gesamtmenge, in einer Menge von 15 bis 40 und insbesondere 22 Gew.-% enthalten. Dabei handelt es sich vorteilhafterweise um Aluminiumpigmente.

Unter Aluminium-Pigmenten (Aluminiumbronze, Silberbronze) werden blättchenförmige Metalleffekt-Pigmente, die aus Hüttenaluminium der Mindestreinheit 99,5% (DIN EN 573-3; 1994-12) bzw. Reinaluminium der Mindestreinheit 99,95% nach dem Hall- Bzw. Hametag-Verfahren hergestellt werden, verstanden. Aluminium-Pigmente dienen der Effektgebung (Metalleffekt) z. B. in Automobildecklacken, Hammerschlag-, Chromeffekt- u.a. Effektlacken sowie in Druckfarben. Sie werden aber auch als funktionelle Pigmente in Korrosionsschutz-Beschichtungen (Barrierewirkung), Reflexionslacken und anderen Spezialgebieten eingesetzt. Eine relativ neue Entwicklung sind Effektpigmente, bei denen das Aluminium-Blättchen mit einer dünnen Schicht Eisenoxid überzogen ist (Eisenoxid-Aluminium-Pigmente). Durch Interferenz an dieser Schicht tritt neben dem Metalleffekt ein Farbeffekt auf (vgl. Römpp Lexikon Lacke und Druckfarben, Georg Thieme Verlag, Stuttgart, New York, 1998, S. 24 "Aluminium-Pigmente).

Darüber hinaus kann die erfindungsgemäße Pigmentpaste noch mindestens ein von den Metallpigmenten (A) unterschiedliches Pigment enthalten, das vorzugsweise aus der Gruppe, bestehend aus organischen und anorganischen, farbgebenden, optisch effektgebenden, elektrisch leitfähigen, magnetischen, magnetisch abschirmenden, fluoreszierenden, phosphoreszierenden, korrosionshemmenden und füllenden Pigmenten, Pigmenten, die mindestens zwei dieser Eigenschaften aufweisen, und Nanopartikeln ausgewählt wird, sofern ein solches zusätzliches Pigment nicht die anwendungstechnischen Eigenschaften der erfindungsgemäßen Pigmentpaste nachteilig beeinflusst. Vorzugsweise enthält die erfindungsgemäße Pigmentpaste kein weiteres Pigment.

Die erfindungsgemäße Pigmentpaste enthält, bezogen auf ihre Gesamtmenge, 0,45 bis 0,75, insbesondere 0,5 bis 0,7 Gew.-%, mindestens eines, insbesondere eines, nichtassoziativ wirkenden Verdickers aus mindestens einem Methacrylatcopolymerisat auf Basis von (C₁-C₆)-Alkyl(meth)-Acrylat und (Meth)acrylsäure, insbesondere Methacrylsäure. Vorzugsweise enthält der Verdicker (B) mindestens zwei unterschiedliche (C₁-C₆)-Alkyl(meth)acrylatmonomere einpolymerisiert. Bevorzugt enthält er, bezogen auf seine Gesamtmenge, 40 bis 60 Gew.-% Methacrylsäure einpolymerisiert. Vorzugsweise wird der Verdicker (B) in der Form einer wässrige Dispersion eingesetzt. Besonders bevorzugt werden die Dispersionen der Verdicker (B) verwendet, wie sie beispielsweise in den deutschen Patentanmeldungen DE 196 52 842 A 1, Spalte 3, Zeile 42, bis Spalte 4, Zeile 4, oder DE 197 41 554 A 1, Spalte 2, Zeile 54, bis Spalte 3, Zeile 15, beschrieben werden. Ganz besonders bevorzugt wird eine wässrige Dispersion des Verdickers (B) verwendet, die unter der Marke Viscalex ® HV 30 von der Firma Allied vertrieben wird und einen Gehalt an Verdicker (B) von 30 Gew.-% hat.

Die erfindungsgemäße Pigmentpaste enthält, bezogen auf ihre Gesamtmenge, 0,1 bis 0,4, insbesondere 0,2 bis 0,3 Gew.-%, mindestens eines, insbesondere eines organischen Amins (C). Vorzugsweise wird das Amin (C) aus der Gruppe der tertiären Amine, vorzugsweise der tertiären Alkylamine und insbesondere der tertiären Hydroxyalkylamine ausgewählt. Beispiele geeigneter tertiärer Hydroxyalkylamine sind Triethanolamin, Methyldiethanolamin und Dimethylethanolamin, insbesondere Dimethylethanolamin.

Die erfindungsgemäße Pigmentpaste enthält desweiteren, bezogen auf ihre Gesamtmenge, 0,5 bis 8, insbesondere 0,61 Gew.-% mindestens eines nichtionischen Tensids. Erfindungsgemäß kommen als nichtionische Tenside oder Niotenside (vgl. Römpp Lexikon Lacke und Druckfarben, Georg Thieme Verlag, 1998, Seite 410, »Niotenside«) Tenside in Betracht, deren Hydrophilie durch Polyetherketten, Hydroxylgruppen, Carbonsäureamidgruppen, Urethangruppen und/oder Estergruppen, eingestellt wird. Niotenside sind handelsübliche Produkte und werden beispielsweise unter der Marke Tegodispers ® 740 von der Firma Tego, unter der Marke Hydropalat ® 3037 von der Firma Cognis oder unter der Marke Setalux ® 6802 AQ 4 von der Firma Akzo vertrieben. Vorzugsweise werden Tegodispers ® 740 und Hydropalat ® 3037 eingesetzt. Hydropalat ® 3037 ist ein siloconfreies oberflächenaktives Verlaufsadditiv für wässrige Systeme mit einer Hydroxylzahl von 73 bis 83 mg KOH/g und einer Verseifungszahl (DGF C-V 3) 56 bis 62. Tegodispers ® 740 ist ein nichtionisches, modifiziertes Fettsäurederivat, das aromaten-, amin- und nonylphenolethoxylatfrei ist. Besonders geeignet ist Surfynol.

Die erfindungsgemäße Pigmentpaste enthält nicht zuletzt, bezogen auf ihre Gesamtmenge, mindestens 50 bevorzugt mindestens 52, insbesondere bevorzugt 54 Gew.-% Wasser.

Darüber hinaus kann die erfindungsgemäße Pigmentpaste noch übliche und bekannte Zusatzstoffe, wie lackübliche Additive, enthalten. Es ist indes ein besonderer Vorteil der erfindungsgemäßen Pigmentpaste, dass sie keine weiteren Zusatzstoffe enthalten muss, um die erfindungsgemäßen Vorteile zu erzielen.

Die Herstellung der erfindungsgemäßen Pigmentpaste erfordert keine methodischen Besonderheiten, sondern erfolgt nach den üblichen und bekannten Methoden der Herstellung von Pigmentpasten oder Pigmentzubereitungen durch Vermischen der vorstehend beschriebenen Bestandteile in geeigneten Mischaggregaten wie Rührkessel, Dissolver, Ultraturrax, Inline-Dissolver, Rührwerksmühlen, Perlmühlen oder Extruder. Dabei kann der Fachmann anhand seines allgemeinen Fachwissens die Verfahren und Vorrichtungen so auswählen, dass die jeweils zu dispergierenden Metallpigmente (A) nicht geschädigt werden.

Erfindungsgemäß wird die erfindungsgemäße Pigmentpaste für die Herstellung effektgebender oder farb- und effektgebender, wässriger Beschichtungsstoffe, insbesondere Wasserbasislacke, verwendet.

Hierzu wird die erfindungsgemäße Pigmentpaste mit mindestens einem wässrigen Mischlack vermischt, wonach die resultierende Mischung homogenisiert wird. Vorzugsweise werden hierfür die vorstehend beschriebenen Verfahren und Vorrichtungen verwendet.

Der Mischlack enthält mindestens ein wasserlösliches und/oder - dispergierbares Bindemittel. Vorzugsweise wird das Bindemittel aus der Gruppe, bestehend aus statistisch, alternierend und blockartig aufgebauten, linearen, verzweigten und kammartig aufgebauten (Co)Polymerisaten von ethylenisch ungesättigten Monomeren oder Polyadditionsharzen und/oder Polykondensationsharzen, ausgewählt. Zu diesen Begriffen wird auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, »Bindemittel«, verwiesen.

Vorzugsweise werden die (Co)Polymerisate von ethylenisch ungesättigten Monomeren aus der Gruppe, bestehend aus (Meth)Acrylat(co)polymerisaten und partiell verseiften Polyvinylestern, insbesondere (Meth)Acrylatcopolymerisaten, und die Polyadditionsharze und/oder Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden, Polyimiden, Polyester-Polyurethanen, Polyether-Polyurethanen oder Polyester-Polyether-Polyurethanen, insbesondere Polyester-Polyurethanen, ausgewählt.

Ganz besonders bevorzugt werden die Bindemittel verwendet, wie sie in üblichen und bekannten Wasserbasislacken eingesetzt werden. Bindemittel dieser Art werden beispielsweise in der deutschen Patentanmeldung DE 196 52 842 A 1, Spalte 2, Zeile 53, bis Spalte 3, Zeile 46, und in der deutschen Patentanmeldung DE 199 14 896 A 1, Spalte 5, Zeile 34, bis Spalte 11, Zeile 5, beschrieben.

Die Bindemittel werden in den für Wasserbasislacke üblichen und bekannten Mengen im Mischlack eingesetzt.

Darüber hinaus kann der Mischlack noch übliche und bekannte Vernetzungsmittel, und Additive in den üblichen und bekannten Mengen enthalten, wie sie beispielsweise in der deutschen Patentanmeldung DE 199 14 896 A 1, Spalte 11, Zeile 6, bis Spalte 16, Zeile 16, beschrieben werden.

Gegenstand der Erfindung ist auch ein Verfahren zur Herstellung eines wässrigen Beschichtungsstoffs, bei dem man mindestens eine Pigmentpaste mit mindestens einem wässrigen Mischlack, enthaltend mindestens ein wasserlösliches und/oder -dispergierbares Bindemittel, vermischt und die resultierende Mischung homogenisiert. Dieses Verfahren ist dadurch gekennzeichnet, dass man mindestens eine von Bindemitteln und Reibharzen freie, wässrige Pigmentpaste in einer der zuvor beschriebenen Zusammensetzungen in einer Menge verwendet, dass der resultierende effektgebende oder farb- und effektgebende, wässrige Beschichtungsstoff, bezogen auf seine Gesamtmenge,
- 0,1 bis 6 Gew.-% mindestens eines der Metallpigmente (A),
- 0,05 bis 2 Gew.-% mindestens einen der nichtassoziativ wirkenden Verdicker (B) aus mindestens einem Methacrylatcopolymerisat auf Basis von (C₁-C₆)-Alkyl(meth)acrylat und (Meth)acrylsäure und
- 0,02 bis 2,4 Gew.-% mindestens eines der nichtionischen Tenside (D)
enthält.

Das Bindemittel wird aus der Gruppe, bestehend aus statistisch, alternierend und blockartig aufgebauten, linearen, verzweigten und kammartig aufgebauten (Co)Polymerisaten von ethylenisch ungesättigten Monomeren oder Polyadditionsharzen und/oder Polykondensationsharzen, ausgewählt.

Vorzugsweise werden die (Co)Polymerisate von ethylenisch ungesättigten Monomeren aus der Gruppe, bestehend aus (Meth)Acrylat(co)polymerisaten und partiell verseiften Polyvinylestern, insbesondere (Meth)Acrylatcopolymerisaten, und die Polyadditionsharze und/oder Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden, Polyimiden, Polyester-Potyurethanen, Polyether-Polyurethanen oder Polyester-Polyether-Polyurethanen, insbesondere Polyester-Polyurethanen, ausgewählt.

Die resultierenden wässrigen Beschichtungsstoffe, insbesondere die Wasserbasislacke, können physikalisch, thermisch selbst- und/oder fremdvernetzend, mit aktinischer Strahlung oder thermisch und mit aktinischer Strahlung härtbar sein. Unter aktinischer Strahlung ist nahes Infrarot (NIR), sichtbares Licht, UV-Strahlung oder Röntgenstrahlung, insbesondere UV-Strahlung, sowie Korpuskularstrahlung, wie Elektronenstrahlung, zu verstehen. Die gemeinsame thermische Härtung und Härtung mit aktinischer Strahlung wird von der Fachwelt auch als Dual-Cure bezeichnet.

Vorzugsweise werden die Wasserbasislacke für die Herstellung von effektgebenden oder farb- und effektgebende Mehrschichtlackierungen auf grundierten und ungrundierten Substraten eingesetzt.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Substrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Die Oberflächen dieser Materialien können bereits vorlackiert oder vorbeschichtet sein.

Demgemäß sind die Wasserbasislacke für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für das Lackieren von Kunststoffteilen, insbesondere transparenten Kunststoffteilen, Kleinteilen, Coils, Container, Emballagen, elektrotechnischen Bauteilen und weißer Ware sowie für das Beschichten von Hohlglasartikeln besonders gut geeignet.

Ganz besonders gut geeignet sind die Wasserbasislacke für die Originallackierung (OEM) und Reparaturlackierung von Kraftfahrzeugen, insbesondere von PKW.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Beschichtung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositmaterialien lackiert werden.

Im Falle von nicht funktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Mehrschichtlackierungen können in unterschiedlicher Weise hergestellt werden. Bevorzugt werden die in der deutschen Patentanmeldung DE 199 30 664 A 1, Seite 15, Zeile 36 bis 58, oder in der deutschen Patentanmeldung DE 199 14 896 A 1, Spalte 2, Zeile 15, bis Spalte 3, Zeilen 24, und Spalte 16, Zeile 54, bis Spalte 18, Zeile 54, beschriebenen Nassin-nass-Verfahren eingesetzt.

Dabei werden die üblichen und bekannten Verfahren und Vorrichtungen zur Applikation und Härtung von Beschichtungsstoffen, insbesondere wässrigen Beschichtungsstoffen, angewandt.

Aufgrund der hervorragenden Verteilung der Metallpigmente (A) in der erfindungsgemäßen Pigmentpaste und ihrer Lagerstabilität resultieren letztlich Mehrschichtlackierungen von hervorragender Farbtonstabilität und Stabilität der optischen Effekte. Die Mehrschichtlackierungen können daher mit Vorteil für die Originallackierung und Reparaturlackierung von PKW der Oberklasse verwendet werden. Vorteilhafterweise enthalten die erfindungsgemäßen Beschichtungsstoffe, bezogen auf ihre Gesamtmenge zwischen 0,25 und 20 Gew.-% Pigmentpaste.

### Beispiel

### Herstellung einer pigmentfreien Beschichtungszusammensetzung B1

57,4 kg einer wäßrigen Bindemittelmischung wurden mit 12,3 kg einer wäßrigen Melaminharzschlämme und 1,8 kg eines Acrylatharzzusates vermengt.
Diese Mischung wurde dann noch mit insgesamt 6 kg üblichen Additiven, 1 kg einer handelsüblichen Mattierungspaste und 3 kg einer Talkumpaste versetzt und innig vermischt. Abschließend wurde noch mit 4,5 kg Wasser und 0,5 kg Polyurethanverdicker versetzt und nochmals gerührt.

### Herstellung einer erfindungsgemäßen Pigmentpaste B2

Zur Herstellung der erfindungsgemäßen Pigmentpaste wurde wie folgt vorgegangen (die prozentualen Angaben sind Gew.-%):
Zunächst wurden 1,8 kg Wasser (15%) mit 0,21 kg Viscalex HV30 (1,75%) vermischt. Dann wurden weitere 4,68 kg Wasser (39%) zugegeben und danach mit 0,26 kg 10%iger Dimethylethanolaminlösung (2,17%) versetzt. Sodann wurden 0,7 kg Surfynol (5,83%) und 0,25 kg Hydropalat 3037 (2,1%) zugegeben.
Die gesamte Mischung wurde dann für 20 Minuten gerührt.
Als nächstes wurden 4,1 kg 65%ige chromatierte Aluminiumpaste (34,15%) zugegeben und die resultierende Mischung für weitere 30 Minuten gerührt.

### Herstellung einer pigmentierten Beschichtungszusammensetzung B3

Zu 86 Gew.-% der pigmentfreien Beschichtungszusammensetzung B1 wurden 12 Gew.-% der erfindungsgemäße Pigmentpaste B2 gegeben und die beiden Bestandteile unter Beimischung von 2 kg Wasser (2%) sorgfältig gemischt.

Die resultierende pigmentierte Beschichtungszusammensetzung war weitgehend frei von Lösungsmitteln, sehr gut transportfähig und wies eine hervorragende Lagerstabilität auf.

## Patentansprüche

1. Von Bindemitteln und Reibharzen freie, wässrige Pigmentpaste, enthaltend, bezogen auf ihre Gesamtmenge,
(A) 15 bis 40 Gew.-% mindestens eines Metallpigments,
(B) 0,45 bis 0,75 Gew.-% mindestens eines nichtassoziativ wirkenden Verdickers aus mindestens einem Methacrylatcopolymerisat auf Basis von (C₁-C₆)-Alkyl(meth)acrylat und (Meth)acrylsäure,
(C) 0,1 bis 0,4 Gew.-% mindestens eines organischen Amins,
(D) 0,5 bis 8 Gew.-% mindestens eines nichtionischen Tensids und
(E) mindestens 50 Gew.-% Wasser.

2. Pigmentpaste nach Anspruch 1, **dadurch gekennzeichnet, dass** der Verdicker (B) mindestens zwei unterschiedliche (C₁-C₆)-Alkyl(meth)acrylatmonomere einpolymerisiert enthält.

3. Pigmentpaste nach einem der Ansprüche 1 oder 2, **dadurch gekennzeichnet, dass** der Verdicker (B), bezogen auf seine Gesamtmenge, 40 bis 60 Gew.-% Methacrylsäure einpolymerisiert enthält.

4. Pigmentpaste nach einem der Ansprüche 1 bis 3, **dadurch gekennzeichnet, dass** das organische Amin (C) aus der Gruppe der tertiären Amine ausgewählt wird.

5. Pigmentpaste nach Anspruch 4, **dadurch gekennzeichnet, dass** das tertiäre Amin (C) aus der Gruppe der Hydroxyalkylamine ausgewählt wird.

6. Pigmentpaste nach Anspruch 5, **dadurch gekennzeichnet, dass** das Hydroxyalkylamin (C) Dimethylethanolamin ist.

7. Pigmentpaste nach einem der Ansprüche 1 bis 6, **dadurch gekennzeichnet, dass** das Metallpigment (A) ein Aluminiumpigment ist.

8. Pigmentpaste nach einem der Ansprüche 1 bis 7, **dadurch gekennzeichnet, dass** sie, bezogen auf ihre Gesamtmenge, mindestens 52 Gew.-% Wasser enthält.

9. Pigmentpaste nach einem der Ansprüche 1 bis 8, **dadurch gekennzeichnet, dass** sie, bezogen auf ihre Gesamtmenge, mindestens 54 Gew.-% Wasser enthält.

10. Pigmentpaste nach einem der Ansprüche 1 bis 9, **dadurch gekennzeichnet, dass** sie, bezogen auf ihre Gesamtmenge
(A) 34 Gew.-% eines Aluminiumpigments,
(B) 0,53 Gew.-% eines nichtassoziativ wirkenden Verdickers aus mindestens einem Methacrylatcopolymerisat auf Basis von (C₁-C₆)-Alkyl(meth)acrylat und (Meth)acrylsäure,
(C) 0,22 Gew.-% eines organischen Amins,
(D) 0,61 Gew.-% eines nichtionischen Tensids,
(E) 54 Gew.-% Wasser
enthält.

11. Verwendung der von Bindemitteln und Reibharzen freien, wässrigen Pigmentpaste gemäß einem der Ansprüche 1 bis 10 für die Herstellung wässriger Beschichtungsstoffe.

12. Verwendung nach Anspruch 11, **dadurch gekennzeichnet, dass** die wässrigen Beschichtungsstoffe Wasserbasislacke sind.

13. Verwendung nach Anspruch 11 oder 12, **dadurch gekennzeichnet, dass** die wässrigen Beschichtungsstoffe der Herstellung Mehrschichtlackierungen dienen.

14. Verfahren zur Herstellung eines wässrigen Beschichtungsstoffs, bei dem man mindestens eine Pigmentpaste mit mindestens einem wässrigen Mischlack, enthaltend mindestens ein wasserlösliches und/oder -dispergierbares Bindemittel, vermischt und die resultierende Mischung homogenisiert, **dadurch gekennzeichnet, dass** man mindestens eine von Bindemitteln und Reibharzen freie, wässrige Pigmentpaste gemäß einem der Ansprüche 1 bis 10 in einer Menge verwendet, dass der resultierende effektgebende oder farb- und effektgebende, wässrige Beschichtungsstoff, bezogen auf seine Gesamtmenge,
- 0,1 bis 6 Gew.-% mindestens eines Metallpigments (A),
- 0,05 bis 2 Gew.-% mindestens eines nichtassoziativ wirkenden Verdickers (B) aus mindestens einem Methacrylatcopolymerisat auf Basis von (C₁-C₆)-Alkyl(meth)acrylat und (Meth)acrylsäure und
- 0,02 bis 2,4 Gew.-% mindestens eines nichtionischen Tensids (D)
enthält.

15. Verfahren nach Anspruch 14, **dadurch gekennzeichnet, dass** das Bindemittel aus der Gruppe, bestehend aus statistisch, alternierend und blockartig aufgebauten, linearen, verzweigten und kammartig aufgebauten (Co)Polymerisaten von ethylenisch ungesättigten Monomeren oder Polyadditionsharzen und/oder Polykondensationsharzen, ausgewählt wird.

16. Verfahren nach Anspruch 15, **dadurch gekennzeichnet, dass** die (Co)Polymerisate von ethylenisch ungesättigten Monomeren aus der Gruppe, bestehend aus (Meth)Acrylat(co)polymerisaten und partiell verseiften Polyvinylestern, insbesondere (Meth)Acrylatcopolymerisaten, und die Polyadditionsharze und/oder Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden, Polyimiden, Polyester-Polyurethanen, Polyether-Polyurethanen oder Polyester-Polyether-Polyurethanen, insbesondere Polyester-Polyurethanen, ausgewählt werden.

## Claims

1. Aqueous pigment paste free from binders and grinding resins, comprising based on its overall amount
(A) from 15 to 40% by weight of at least one metal pigment,
(B) from 0.45 to 0.75% by weight of at least one nonassociative thickener comprising at least one methacrylate copolymer based on C₁-C₆ alkyl (meth)acrylate and (meth)acrylic acid,
(C) from 0.1 to 0.4% by weight of at least one organic amine,
(D) from 0.5 to 8% by weight of at least one nonionic surfactant, and
(E) at least 50% by weight of water.

2. Pigment paste according to Claim 1, **characterized in that** the thickener (B) contains in copolymerized form at least two different C₁-C₆ alkyl (meth)acrylate monomers.

3. Pigment paste according to either of Claims 1 and 2, **characterized in that** the thickener (B), based on its overall amount, contains from 40 to 60% by weight of methacrylic acid in copolymerized form.

4. Pigment paste according to any of Claims 1 to 3, **characterized in that** the organic amine (C) is selected from the group of the tertiary amines.

5. Pigment paste according to Claim 4, **characterized in that** the tertiary amine (C) is selected from the group of the hydroxyalkylamines.

6. Pigment paste according to Claim 5, **characterized in that** the hydroxyalkylamine (C) is dimethylethanolamine.

7. Pigment paste according to any of Claims 1 to 6, **characterized in that** the metal pigment (A) is an aluminium pigment.

8. Pigment paste according to any of Claims 1 to 7, **characterized in that** it comprises based on its overall amount at least 52% by weight of water.

9. Pigment paste according to any of Claims 1 to 8, **characterized in that** it comprises based on its overall amount at least 54% by weight of water.

10. Pigment paste according to any of Claims 1 to 9, **characterized in that** it comprises based on its overall amount
(A) 34% by weight of an aluminium pigment,
(B) 0.53% by weight of a nonassociative thickener comprising at least one methacrylate copolymer based on C₁-C₆ alkyl (meth) acrylate and (meth)acrylic acid,
(C) 0.22% by weight of an organic amine,
(D) 0.61% by weight of a nonionic surfactant, and
(E) 54% by weight of water.

11. Use of an aqueous pigment paste free from binders and grinding resins, according to any of Claims 1 to 10, for preparing aqueous coating materials.

12. Use according to Claim 11, **characterized in that** the aqueous coating materials are aqueous basecoat materials.

13. Use according to Claim 11 or 12, **characterized in that** the aqueous coating materials serve for producing multicoat paint systems.

14. Process for preparing an aqueous coating material by mixing at least one pigment paste with at least one aqueous mixing varnish comprising at least one water-soluble and/or -dispersible binder and homogenizing the resulting mixture, **characterized in that** at least one aqueous pigment paste free from binders and grinding resins, according to any of Claims 1 to 10, is used in an amount such that the resulting aqueous effect or colour and effect coating material comprises based on its overall amount
- from 0.1 to 6% by weight of at least one metal pigment (A),
- from 0.05 to 2% by weight of at least one nonassociative thickener (B) comprising at least one methacrylate copolymer based on C₁-C₆ alkyl (meth)-acrylate and (meth)acrylic acid, and
- from 0.02 to 2.4% by weight of at least one nonionic surfactant (D).

15. Process according to Claim 14, **characterized in that** the binder is selected from the group consisting of random, alternating and block, linear, branched, and comb addition (co)polymers of ethylenically unsaturated monomers or polyaddition resins and/or polycondensation resins.

16. Process according to Claim 15, **characterized in that** the addition (co)polymers of ethylenically unsaturated monomers are selected from the group consisting of (meth) acrylate (co)polymers and partially hydrolysed polyvinyl esters, especially (meth)acrylate copolymers, and the polyaddition resins and/or polycondensation resins are selected from the group consisting of polyesters, alkyds, polyurethanes, polylactones, polycarbonates, polyethers, epoxy resin-amine adducts, polyureas, polyamides, polyimides, polyester-polyurethanes, polyether-polyurethanes, and polyester-polyether-polyurethanes, especially polyester-polyurethanes.

## Revendications

1. Pâte pigmentaire aqueuse exempte d'agents liants et de résines abrasives, contenant, par rapport à sa quantité totale,
(A) 15 à 40% en poids d'au moins un pigment métallique,
(B) 0,45 à 0,75% en poids d'au moins un épaississant à effet non associatif composé d'au moins un copolymère de méthacrylate à base de (méth)acrylate d'alkyle en C₁-C₆ et d'acide (méth) acrylique,
(C) 0,1 à 0,4% en poids d'au moins une amine organique,
(D) 0,5 à 8% en poids d'au moins un tensioactif non ionique et
(E) au moins 50% en poids d'eau.

2. Pâte pigmentaire selon la revendication 1, **caractérisée en ce que** l'épaississant (B) contient au moins deux monomères différents de méthacrylate d'alkyle en C₁-C₆ sous forme polymérisée.

3. Pâte pigmentaire selon l'une quelconque des revendications 1 ou 2, **caractérisée en ce que** l'épaississant (B) contient, par rapport à sa quantité totale, 40 à 60% en poids d'acide méthacrylique sous forme polymérisée.

4. Pâte pigmentaire selon l'une quelconque des revendications 1 à 3, **caractérisée en ce que** l'amine organique (C) est choisie dans le groupe des amines tertiaires.

5. Pâte pigmentaire selon la revendication 4, **caractérisée en ce que** l'amine tertiaire (C) est choisie dans le groupe des hydroxyalkylamines.

6. Pâte pigmentaire selon la revendication 5, **caractérisée en ce que** l'hydroxyalkylamine (C) est la diméthyléthanolamine.

7. Pâte pigmentaire selon l'une quelconque des revendications 1 à 6, **caractérisée en ce que** le pigment métallique (A) est un pigment d'aluminium.

8. Pâte pigmentaire selon l'une quelconque des revendications 1 à 7, **caractérisée en ce qu'**elle contient, par rapport à sa quantité totale, au moins 52% en poids d'eau.

9. Pâte pigmentaire selon l'une quelconque des revendications 1 à 8, **caractérisée en ce qu'**elle contient, par rapport à sa quantité totale, au moins 54% en poids d'eau.

10. Pâte pigmentaire selon l'une quelconque des revendications 1 à 9, **caractérisée en ce qu'**elle contient, par rapport à sa quantité totale,
(A) 34% en poids d'un pigment d'aluminium,
(B) 0,53% en poids d'un épaississant à effet non associatif composé d'au moins un copolymère de méthacrylate à base de (méth) acrylate d'alkyle en C₁-C₆ et d'acide (méth)acrylique,
(C) 0,22% en poids d'une amine organique,
(D) 0,61% en poids d'un tensioactif non ionique,
(E) 54% en poids d'eau.

11. Utilisation de la pâte pigmentaire aqueuse exempte d'agents liants et de résines abrasives selon l'une quelconque des revendications 1 à 10 pour la fabrication de matériaux de revêtement aqueux.

12. Utilisation selon la revendication 11, **caractérisée en ce que** les matériaux de revêtement aqueux sont des vernis à base d'eau.

13. Utilisation selon la revendication 11 ou 12, **caractérisée en ce que** les matériaux de revêtement aqueux servent à la fabrication de vernis multicouches.

14. Procédé de fabrication d'un matériau de revêtement aqueux, dans lequel on mélange au moins une pâte pigmentaire à au moins un vernis mixte aqueux, contenant au moins un agent liant soluble et/ou dispersable dans l'eau et on homogénéise le mélange obtenu, **caractérisé en ce que** l'on utilise au moins une pâte pigmentaire aqueuse exempte d'agents liants et de résines abrasives selon l'une quelconque des revendications 1 à 10 en quantité telle que le matériau de revêtement aqueux obtenu donnant un effet ou une couleur et un effet contienne, par rapport à sa quantité totale,
- 0,1 à 6% en poids d'au moins un pigment métallique (A),
- 0,05 à 2% en poids d'au moins d'un épaississant à effet non associatif (B) composé d'au moins un copolymère de méthacrylate à base de (méth)acrylate d'alkyle en C₁-C₆ et d'acide (méth)acrylique et
- 0,02 à 2,4% en poids d'au moins un tensioactif non ionique (D).

15. Procédé selon la revendication 14, **caractérisé en ce que** l'on choisit l'agent liant dans le groupe constitué de (co)polymères formés en mode statistique, alterné et séquentiel, élaborés sous forme linéaire, ramifiée et en peigne, de monomères à insaturation éthylénique ou de résines de polyaddition et/ou de résines de polycondensation.

16. Procédé selon la revendication 15, **caractérisé en ce que** les (co) polymères de monomères à insaturation éthylénique sont choisis dans le groupe constitué de (co)polymères de (méth)acrylate et d'esters polyvinyliques partiellement saponifiés, en particulier de copolymères de (méth)acrylate, et les résines de polyaddition et/ou les résines de polycondensation sont choisies dans le groupe constitué des polyesters, des alkydes, des polyuréthannes, des polylactones, des polycarbonates, des polyéthers, des produits d'addition de résines époxy-amine, des polyurées, des polyamides, des polyimides, des systèmes polyester-polyuréthanne, des systèmes polyéther-polyuréthanne ou des systèmes polyester-polyéther-polyuréthanne, en particulier, des systèmes polyester-polyuréthanne.
